Europäisches Patentamt

European Patent Office

Office européen des brevets

(19)

(11) EP 0 735 767 A2

(12) EUROPÄISCHE PATENTANMELDUNG

(43) Veröffentlichungstag:
02.10.1996 Patentblatt 1996/40

(51) Int. Cl.6: H04N 7/173

(21) Anmeldenummer: 96104103.5

(22) Anmeldetag: 15.03.1996

(84) Benannte Vertragsstaaten:
CH DE ES FR GB IT LI SE

(30) Priorität: 28.03.1995 DE 19511332

(71) Anmelder: Alcatel SEL Aktiengesellschaft
D-70435 Stuttgart (DE)

(72) Erfinder: Schäfer, Johann-Peter
74343 Sachsenheim (DE)

(74) Vertreter: Schätzle, Albin, Dipl.-Phys. et al
Alcatel Alsthom
Intellectual Property Department,
Postfach 30 09 29
70449 Stuttgart (DE)

(54) Breitbandverteilsystem und Verfahren dazu

(57) Bei einem Breitbandverteilsystem (SYS) zum Verteilen von Fernsehsignalen (TVS) und Videosignalen (VOD) ist der zum Abruf von Videosignalen eingerichtete Rückkanal derart auf die Teilnehmer (TN) des Breitbandverteilsystems (SYS) aufgeteilt, daß jeweils einer Gruppe von Teilnehmern (TN) im Zeitmultiplexverfahren ein Teil des Rückkanals zugewiesen wird, und die einzelnen Teilnehmer (TN) einer Gruppe gleichermaßen Zugriff auf den der jeweiligen Gruppe zugewiesenen Teil des Rückkanals haben. Der Zugriff des einzelnen Teilnehmers (TN) wird über eine Steuereinrichtung (CONTROL) in der Zentrale (ZE) des Breitbandverteilsystems (SYS) überwacht. Zur Synchronisation der von den Teilnehmern (TN) übertragenen Signale auf den im Zeitmultiplex aufgeteilten Rückkanal, hat die Zentrale (ZE) eine Synchronisiereinrichtung (SYNC) mittels der durch Laufzeitunterschiede hervorgerufene Phasenunterschiede kompensiert werden.

FIG.2

EP 0 735 767 A2

## Beschreibung

Die Erfindung betrifft ein Breitbandverteilsystem nach dem Oberbegriff des Patentanspruchs 1, ein Verfahren dazu und eine Zentrale dafür.

Breitbandverteilnetze als solche sind z.B. aus "Der Fernmeldeingenieur" Heft 8/1994, Seiten 5-10, 22-25 und 29-30, Heidecker Verlag, bekannt. Es ist ein Breitbandverteilnetz beschrieben, das neben verschiedenen Arten von unidirektionalen TV-Diensten auch bidirektionale, interaktive Videodienste zur Verfügung stellt. Teilnehmer werden über einen Vorwartskanal mit Fernseh- und Videosignalen versorgt, und können über einen Rückkanal ihr teilnehmerindividuelles Videosignal beim Server anfordern. Das Zugriffskonzept auf den Rückkanal ist z.B. zweistufig. In einer ersten Stufe ist ein Zugriffsverfahren mit zentraler Steuerung verwendet. Den einzelnen Teilnehmern eines Netzsegments werden z.B. im Zeitmultiplexverfahren Zeitschlitze zur Übertragung der teilnehmerindividuellen Informationen zugewiesen. In einer zweiten Stufe werden die Netzsegmente zellstrukturiert zusammengefaßt und mit einer knotenindividuellen Adresse versehen zum Server übertragen. Der Rückkanal wird somit in teilnehmerindividuelle Kanäle aufgeteilt. Dies hat z.B. den Nachteil, daß die Übertragungsrate pro Teilnehmer gering ist.

Es ist deshalb Aufgabe der Erfindung, ein Breitbandverteilsystem zur Verfügung zu stellen, das Teilnehmern einen flexibleren Zugriff auf den Rückkanal ermöglicht.

Diese Aufgabe wird durch die Lehre der unabhängigen Patentansprüche 1, 10 und 11 gelöst.

Vorteilhafte Ausgestaltungen sind den abhängigen Patentansprüchen zu entnehmen.

Ein besonderer Vorteil der Erfindung ist der im statistischen Mittel schnellere Zugriff der Teilnehmer auf den Rückkanal.

Ein weiterer Vorteil der Erfindung ist der geringere schaltungstechnische Aufwand zum Aufbau der ersten Stufe.

Des weiteren ist aufgrund der Verwendung eines Kollisionsüberwachungsverfahrens die Flexibilität bei der Zuschaltung weiterer Teilnehmer von Vorteil.

Im folgenden wird die Erfindung anhand eines Ausführungsbeispiels unter Zuhilfenahme der Figuren 1 bis 6 erläutert. Es zeigen:

Fig. 1    eine schematische Darstellung eines Ausführungsbeispiels des erfindungsgemäßen Breitbandverteilsystems,

Fig. 2    einen schematisch dargestellten Aufbau einer Zentrale des erfindungsgemäßen Breitbandverteilsystems aus Fig. 1,

Fig. 3    zwei schematische Darstellungen der Aufteilung des Rückkanals,

Fig. 4    einen schematisch dargestellten Aufbau einer Synchronisierungseinrichtung des erfindungsgemäßen Breitbandverteilsystems aus Fig. 1,

Fig. 5    eine schematische Darstellung eines Breitbandnetzabschlusses aus Fig. 1, und

Fig. 6    eine schematische Darstellung eines weiteren Breitbandnetzabschlusses aus Fig. 1.

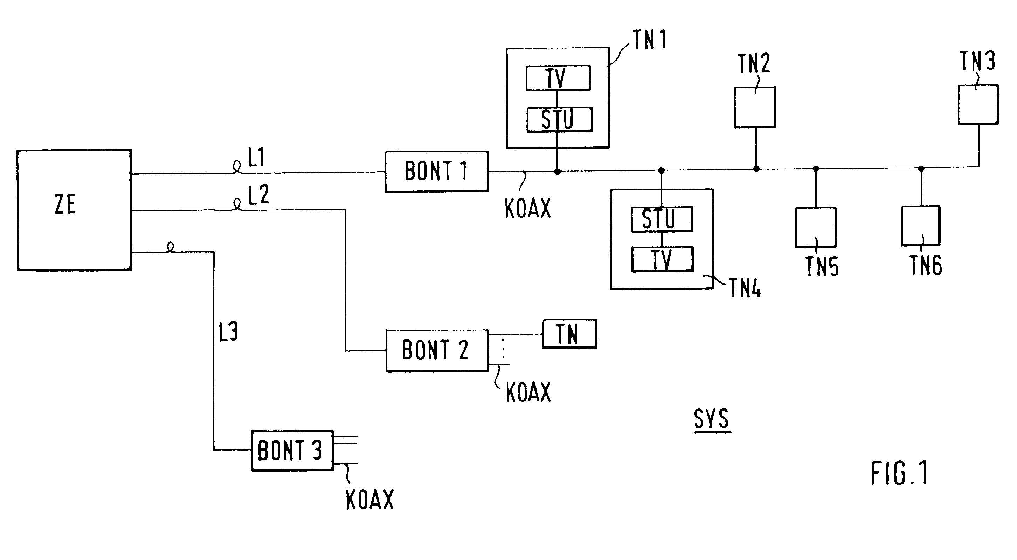

Ein Ausführungsbeispiel der Erfindung wird nun anhand der Figuren 1 bis 6 beschrieben.

Fig. 1 zeigt ein erfindungsgemäßes Breitbandverteilsystem. Das Breitbandverteilsystem SYS hat eine Zentrale ZE, drei Breitbandnetzabschlüsse BONT1, BONT2, BONT3 und mehrere Teilnehmer TN1 bis TN6. Die Breitbandnetzabschlüsse BONT1 bis BONT3 sind jeweils über eine optische Glasfaserleitung L1, L2, L3 mit der Zentrale ZE verbunden. Der erste Breitbandnetzabschluß BONT1 ist über eine elektrische Koaxialleitung KOAX mit sechs Teilnehmern TN1 bis TN6 verbunden. Die Breitbandnetzabschlüsse BONT2 und BONT3 sind jeweils über separate elektrische Koaxialleitungen KOAX mit Teilnehmern TN verbunden. Jeder Teilnehmer TN, TN1 bis TN6 hat einen Fernseher TV und einen Set-Top-Konverter STU. Der Fernseher TV ist über den Set-Top-Konverter STU mit der elektrischen Koaxialleitung KOAX verbunden.

Die Zentrale ZE dient dem Verteilen von Fernseh-, Rundfunk- und Videosignalen. Die von der Zentrale ZE zu übertragenden Signale werden über optische Glasfaserleitungen L1, L2, L3 zu den Breitbandnetzabschlüssen BONT1 bis BONT3 übertragen. Die optischen Glasfaserleitungen L1, L2, L3 sind unterschiedlich lang, was zu Laufzeitunterschieden führt. Bei einer Längendifferenz von 10 km beträgt der Laufzeitunterschied ca. 50 µs. In den Breitbandnetzabschlüssen BONT1 bis BONT3 findet eine optische/elektrische Wandlung statt. Die von den Breitbandnetzabschlüssen BONT1 bis BONT3 zu übertragenden Signale werden jeweils über eine oder mehrere Koaxialleitungen KOAX zu mehreren Teilnehmern TN übertragen. Die Übertragung von Signalen von der Zentrale ZE zu den Teilnehmern TN erfolgt in einem Vorwärtskanal mit hoher Datenrate, in einem Frequenzbereich von ca. 50 MHz bis 630 MHz. Die Übertragung von Signalen von den Teilnehmern TN zur Zentrale ZE erfolgt in einem Rückkanal mit niedriger Datenrate in einem Frequenzbereich von ca. 5 MHz bis 45 MHz. Jeder Teilnehmer kann grundsätzlich alle von der Zentrale ZE übertragenen Signale empfangen. Manche Signale, z.B. spezielle Fernsehsignale und die Videosignale, sind jedoch verschlüsselt und nur von Teilnehmer TN mit Berechtigung zu entschlüsseln.

Der Teilnehmer TN1 kann z.B. über den Set-Top-Konverter STU aus einem von der Zentrale ZE angebotenen Katalog von Videofilmen über den Rückkanal spezielle Videofilme von der Zentrale ZE anfordern. Die Zentrale ZE sendet den angeforderten Videofilm in Form von Videosignalen mit der ausschließlichen Berechtigung der Entschlüsselung für Teilnehmer TN1 an alle Teilnehmer TN. Nur Teilnehmer TN1 ist berechtigt und in der Lage, über den Set-Top-Konverter STU die angeforderten Videosignale zu entschlüsseln.

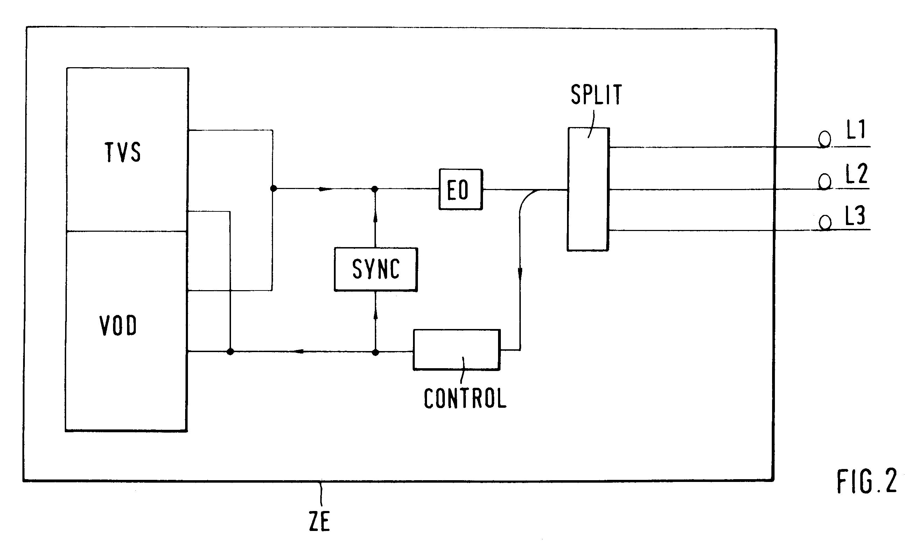

Fig. 2 zeigt nun einen schematischen Aufbau der Zentrale aus Fig. 1. Die Zentrale ZE beinhaltet einen Fernseh- und Rundfunk-Server TVS, einen Video-auf-Abruf Server VOD, einen elektrisch/optischen Wandler EO und einen optischen Strahlteiler SPLIT.

Der Fernseh- und Rundfunk-Server TVS und der Video-auf-Abruf-Server VOD dienen dem Verteilen von Rundfunk-, Fernseh- und Videosignalen. Die einzelnen Signale werden überlagert und über den elektrisch/optischen Wandler EO dem optischen Strahlteiler SPLIT zugeführt, über den sie zu den Breitbandnetzabschlüssen BONT1 bis BONT3 und den Teilnehmern TN übertragen werden.

Die an der Zentrale ZE über die optischen Glasfaserleitungen L1, L2, L3 empfangbaren Signale, das sind z.B. Abrufsignale von Teilnehmern TN für spezielle Videosignale, werden nach Durchlaufen des optischen Strahlteilers SPLIT der Steuereinrichtung CONTROL zugeführt, über die sie einerseits zu den Fernseh- und Rundfunk-Server TVS; sowie den Video-auf-Abruf Server VOD, und andererseits zu der Synchonisiereinrichtung SYNC übertragen werden.

Die Synchronisiereinrichtung SYNC ist zusätzlich mit dem elektrischen Anschluß des elektrisch/optischen Wandlers EO verbunden.

Die Synchronisiereinrichtung SYNC dient der Synchronisation der von den Breitbandnetzabschlüssen BONT1 bis BONT3 übertragenen Abrufsignale auf den im Zeitmultiplex aufgeteilten Rückkanal. Den mit der Zentrale ZE verbundenen Breitbandnetzabschlüssen BONT1 bis BONT3 werden im Zeitmultiplexverfahren Zeitschlitze zugewiesen.

Jeder Breitbandnetzabschluß BONT1 bis BONT3 ist mit mehreren Teilnehmern TN verbunden, die gleichermaßen Zugriff auf dem jeweiligen Breitbandnetzabschluß BONT zugewiesenen Zeitschlitz haben. Die mit einem Breitbandnetzabschluß verbundenen Teilnehmer TN bilden eine Gruppe von Teilnehmern TN. Bei zeitgleichem Senden von Abrufsignalen von unterschiedlichen Teilnehmern TN einer Gruppe, kommt es zu sog. Kollisionen, das sind irreversible Überlagerungen von Signalen. Treten Kollisionen auf, so kann keine Auswertung der Abrufsignale erfolgen. Die Steuereinrichtung CONTROL überwacht das Auftreten von Kollisionen. Die Erkennung von Kollisionen erfolgt z.B. über einen Schwellwertdetektor, der ein Alarmsignal ausgibt, falls die Amplitude des überwachten Signals einen vorgegebenen Schwellwert übersteigt. Wird in der Steuereinrichtung CONTROL das Auftreten einer Kollision erkannt, so wird die Weiterleitung der Abrufsignale unterbunden und alle Teilnehmer TN einer Gruppe, in der die Kollision aufgetreten ist, erhalten über den Vorwärtskanal eine Rückmeldung über das Auftreten einer Kollision. Die Rückmeldung erhält zur Identifikation der Gruppe eine Angabe über den mit der Gruppe verbundenen Breitbandnetzabschluß BONT. Nur der in der Rückmeldung angegebene Breitbandnetzabschluß BONT kann die Rückmeldung auswerten. Dadurch ist eine korrekte Adressierung gewährleistet. Die Teilnehmer TN der Gruppe, die die Rückmeldung erhalten, wiederholen ihren Sendevorgang nach einer durch einen Zufallsgenerator bestimmten Zeitspanne. Der Zufallsgenerator befindet sich im Set-Top-Konverter. Tritt keine Kollision auf, so werden die Abrufsignale der Teilnehmer TN durch die Steuereinrichtung CONTROL zum Fernseh- und Rundfunk-Server TVS und/oder zum Video-auf-Abruf Server VOD weitergeleitet.

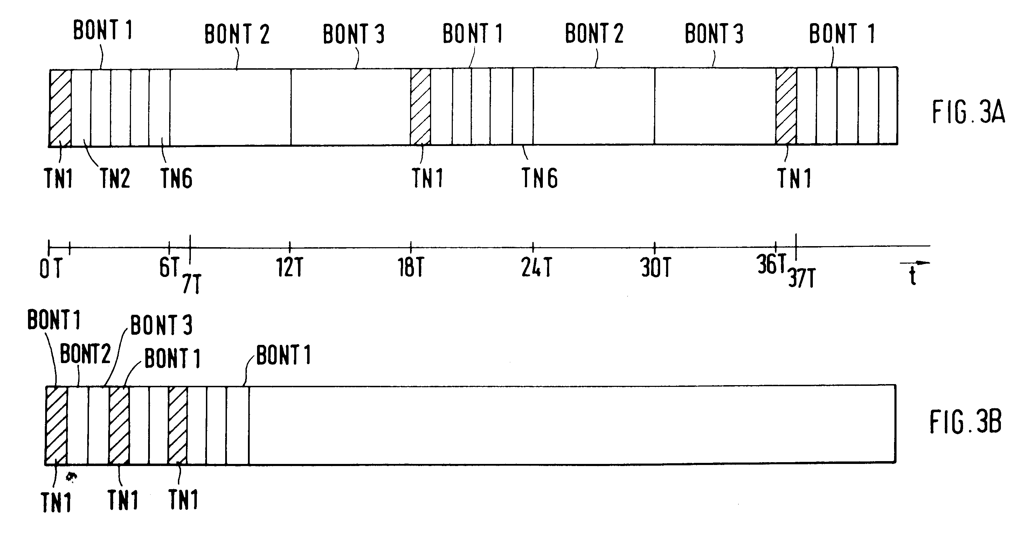

Fig. 3 zeigt nun zwei schematische Darstellungen für den im Zeitmultiplexverfahren aufgeteilten Rückkanal.

Fig. 3a zeigt die Aufteilung des Rückkanals in teilnehmerindividuelle Kanäle nach dem Stand der Technik für ein Breitbandverteilsystem mit einer Zentrale, drei Breitbandnetzabschlüssen BONT1, BONT2, BONT3 und jeweils sechs Teilnehmern TN1 bis TN6 pro Breitbandnetzabschluß BONT. Jedem Teilnehmer TN ist ein Zeitschlitz mit der Dauer T zugewiesen. Die Teilnehmer TN eines Breitbandnetzabschlusses BONT werden zeitlich nacheinander bedient. Jedem Breitbandnetzabschluß BONT ist ein Zeitschlitz mit der Dauer 6T zugewiesen. Die einzelnen Breitbandnetzabschlüsse BONT werden zeitlich nacheinander bedient.

Möchte der erste Teilnehmer TN1 des ersten Breitbandnetzabschlusses BONT1 nun Abrufsignale zur Zentrale übertragen, und benötigt er dafür z.B. eine Zeitdauer von 3T, so ist durch die Aufteilung des Rückkanals für die Übertragung der Abrufsignale eine Gesamtzeitdauer von 37T erforderlich.

Fig. 3b zeigt eine Aufteilung des Rückkanals für das erfindungsgemäße Breitbandverteilsystem SYS mit drei Breitbandnetzabschlüssen BONT1 bis BONT3 und sechs Teilnehmern TN1 bis TN6 per Breitbandnetzabschluß BONT. Jedem Breitbandnetzabschluß BONT ist ein Zeitschlitz mit der Dauer T zugewiesen. Die einzelnen Breitbandnetzabschlüsse BONT werden zeitlich nacheinander bedient.

Die sechs Teilnehmer TN1 bis TN6 eines Breitbandnetzabschlusses BONT haben gleichermaßen Zugriff zu den dem jeweiligen Breitbandnetzabschluß BONT zugewiesenen Zeitschlitz.

Möchte der erste Teilnehmer TN1 des ersten Breitbandnetzabschlusses BONT nun Abrufsignale zur Zentrale übertragen, und benötigt er dafür z.B. eine Zeitdauer von 3 T, so ist durch die Aufteilung des Rückkanals für die Übertragung der Abrufsignale und unter der Voraussetzung, daß die Teilnehmer TN2 bis TN6 während der Übertragung der Abrufsignale von Teilnehmer TN1 nicht senden, eine Gesamtzeitdauer von 7T erforderlich. Eine Gesamtzeitdauer von 7T anstelle der 37T aus dem Vergleichsbeispiel zu Fig. 3a stellt eine erhebliche Steigerung der Übertragungsgeschwindigkeit dar. Bei einer geringen Auslastung des Rückkanals, wovon i.a. auszugehen ist, da die Teilnehmer nach Übertragung der Abrufsignale, dessen Dauer im Sekundenbereich liegt, frühestens nach 90 min., nach Beendigung des angeforderten Videofilmes, wieder Abrufsignale übertragen, ist somit selbst bei Auftreten von Kollisionen eine erhebliche Steigerung der Übertragungsgeschwindigkeit erreichbar.

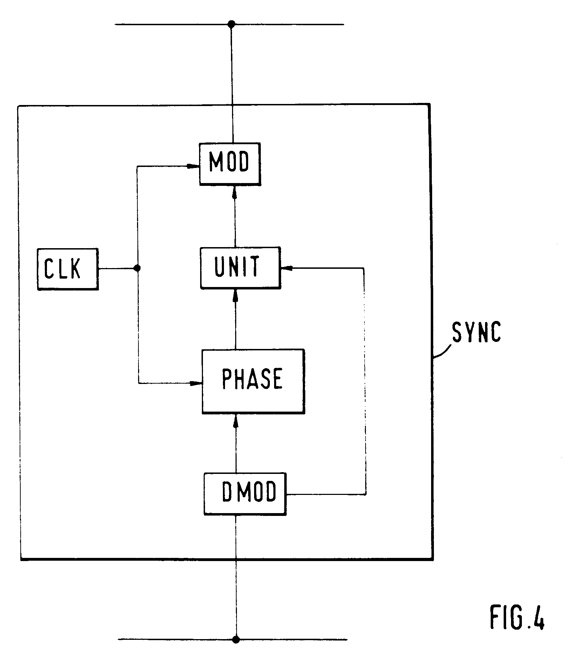

Fig. 4 zeigt nun den schematisch dargestellten Aufbau der Synchronisiereinrichtung aus Fig. 1.

Die Synchronisiereinrichtung SYNC beinhaltet einen Taktgenerator CLK, einen Modulator MOD, einen Demodulator DMOD, einen Phasenkomparator PHASE und eine Steuereinheit UNIT. Die Steuereinheit UNIT ist z.B. ein Mikroprozessor.

Im Taktgenerator CLK wird ein Synchronisationssignal erzeugt. Das Synchronisationssignal ist ein Taktsignal mit der Periodendauer D und der Impulsdauer I. Die Periodendauer D richtet sich nach der Anzahl der mit der Zentrale verbundenen Breitbandnetzabschlüsse BONT. Jedem Breitbandnetzabschluß BONT wird z.B. ein Zeitschlitz der Impulsdauer I zugeordnet. Die Zeitschlitze werden den Breitbandnetzabschlüssen BONT zeitlich nacheinander zugewiesen, zwischen den Zeitschlitzen befindet sich jeweils eine Pause P. Bei n Breitbandnetzabschlüssen BONT ergibt sich eine Periodendauer $D = n^* (I+P)$. Die Impulsdauer I ist z.B. I = 100 µs, die Pause P ist z.B. P = 6 µs, die Anzahl n der Breitbandnetzabschlüsse BONT ist z.B. n = 3. Damit ergibt sich eine Periodendauer D = 318 µs. Das Synchronisationssignal wird über den Modulator MOD im Vorwärtskanal des Breitbandverteilsystems SYS zu den Breitbandnetzabschlüssen BONT übertragen. Auf das Synchronisationssignal senden die einzelnen Breitbandnetzabschlüsse BONT jeweils ein Rücksignal, welches über den Demodulator DMOD in der Synchronisiereinrichtung SYNC empfangen, demoduliert und dem Phasenkomparator PHASE zugeführt wird.

Im Phasenkomparator PHASE wird die Phase des Synchronisationssignals mit der Phase des Rücksignals verglichen und die Phasendifferenz der Steuereinheit UNIT zugeführt.

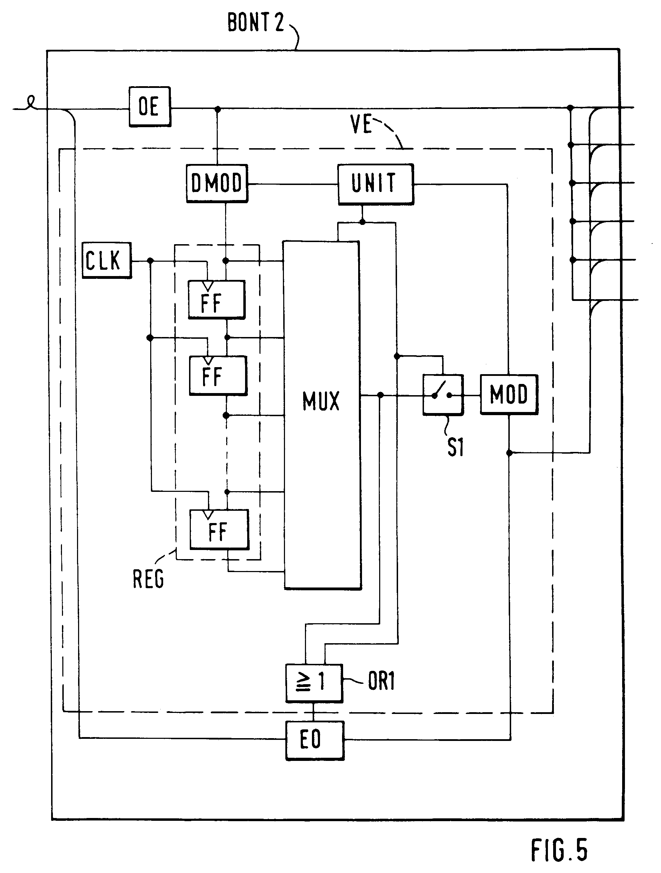

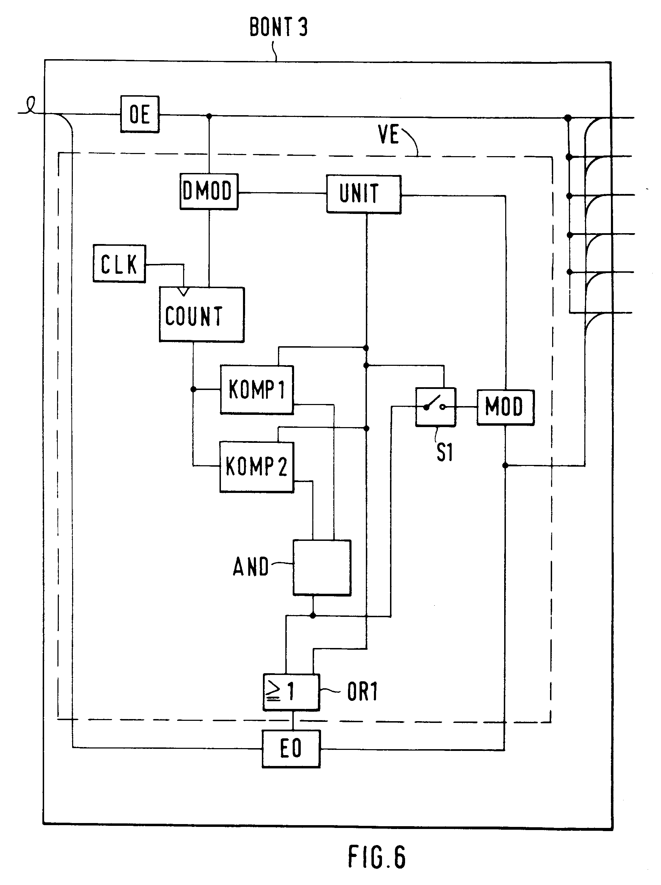

In der Steuereinheit UNIT werden aus den Phasendifferenzen zwischen den Rücksignalen der Breitbandnetzabschlüsse BONT und dem Synchronisationssignal Steuersignale für die Verzögerungseinrichtungen der Breitbandnetzabschlüsse BONT (siehe Fig. 5, Fig. 6) ermittelt. Die Steuersignale werden über den Modulator MOD im Vorwärtskanal zu den Breitbandnetzabschlüssen BONT übertragen. Die Breitbandnetzabschlüsse BONT senden neben den Rücksignalen, Zustandssignale zur Synchronisiereinrichtung SYNC. Die Zustandsignale werden über den Demodulator der Steuereinheit UNIT zugeführt. Die Zustandssignale enthalten z.B. Angaben über die eingestellt Verzögerung in den Verzögerungseinrichtungen der Breitbandnetzabschlüsse BONT.

Fig. 5 zeigt nun eine schematische Darstellung des Breitbandnetzabschlusses BONT2 aus Fig. 1.

Der Breitbandnetzabschluß BONT2 beinhaltet eine Verzögerungseinrichtung VE, einen optisch/elektrischen Wandler OE und einen elektrisch/optischen Wandler EO. Der Breitbandnetzabschluß BONT2 empfängt über eine optische Glasfaserleitung optische Signale von einer Zentrale ZE, wandelt diese Signale im optisch/elektrischen Wandler OE in elektrische Signale und verteilt die elektrischen Signale an alle mit dem Breitbandnetzabschluß BONT2 verbundenen Teilnehmer. Des weiteren empfängt der Breitbandnetzabschluß BONT2 über elektrische Koaxialleitungen elektrische Signale von den Teilnehmern, wandelt diese Signale im elektrisch/optischen Wandler EO in optische Signale und überträgt diese optischen Signale zu einer Zentrale ZE. Die empfangenen optischen Signale enthalten das Synchronisationssignal und die Steuersignale, die zu einer Zentrale übertragenden optischen Signale enthalten die Rücksignale und die Zustandssignale.

Die Verzögerungseinrichtung VE beinhaltet einen Taktgenerator CLK, eine Steuereinheit UNIT, z.B. ein Mikroprozessor, mehrere D-Flipflops FF, einen Multiplexer MUX, einen Schalter S1, z.B. ein Transistor, ein ODER-Gatter OR, einen Modulator MOD und einen Demodulator DMOD.

Der Demodulator DMOD ist mit dem elektrischen Anschluß des optisch/elektrischen Wandlers OE, dem Eingang des ersten D-Flipflops FF und der Steuereinheit UNIT verbunden. Der Demodulator DMOD demoduliert aus den empfangenen, und elektrisch gewandelten Signalen das Synchronisationssignal und das für den Breitbandnetzabschluß BONT2 spezifische Steuersignal, und führt das Synchronistaionssignal dem Eingang des ersten D-Flipflops FF und das Steuersignal der Steuereinheit UNIT zu.

Die D-Flipflops FF sind in Serie geschaltet. Der nicht-invertierende Ausgang des ersten D-Flipflops FF ist mit dem Eingang des zweiten D-Flipflops FF verbunden, etc. Die D-Flipflops FF bilden damit ein Schieberegister REG. Alle D-Flipflops FF werden mit einem im Taktgenerator erzeugten Takt getaktet. Die Periodendauer des Taktes ist um Größenordnungen, z.B. Faktor 100 geringer als die Periodendauer des Synchronisationssignals. Die Ausgänge der D-Flipflops FF und der Eingang des ersten D-Flipflops FF sind mit dem Multiplexer MUX verbunden, der von der Steuereinheit UNIT gesteuert und dessen Ausgang mit dem Schalter S1 und mit dem ersten Eingang des ODER-Gatters OR verbunden ist. Der Schalter S1 wird von der Steuereinheit UNIT gesteuert und ist zusätzlich mit dem Modulator MOD verbunden. Der zweite Eingang des ODER-Gatters OR ist mit der Steuereinheit UNIT und der Ausgang des ODER-Gatters OR mit dem elektrisch/optischen Wandler EO verbunden.

Im folgenden wird ein Vorgang der Synchronisation zwischen einer Zentrale ZE und mehreren Breitbandnetzabschlüssen BONT beschrieben.

Von der Zentrale ZE aus werden Synchronisationssignale zu allen mit der Zentrale ZE verbundenen Breitbandnetzabschlüsse BONT übertragen.

Zusätzlich werden von der Zentrale ZE aus zeitlich nacheinander für jeden Breitbandnetzabschluß BONT spezifische Steuersignale übertragen. Mit den Steuersignalen wird der jeweilige Breitbandnetzabschluß BONT aufgefordert, auf das Synchronisationssignal ein Rücksignal zur Zentrale ZE zu senden.

Dazu wird von der Steuereinheit UNIT im jeweiligen Breitbandnetzabschluß BONT der Multiplexer MUX auf einen Wert mittlerer Verzögerung eingestellt, der Schalter S1 geschlossen und der elektrisch/optische Wandler EO durch Beschalten des ODER-Gatters OR mit Dauer-Eins eingeschaltet. Der jeweilige Breitbandnetzabschluß BONT überträgt das durch die optische Glasfaserleitung verzögerte und durch das Schieberegister REG verzögerte Synchronisationssignal über den Modulator MOD und elektrisch/optischen Wandler EO in Form eines Rücksignals zur Zentrale ZE. Zusätzlich wird die Stellung des Multiplexers MUX in Form von Zustandsignalen zur Zentrale ZE übertragen. In der Zentrale ZE findet im Phasenkomparator PHASE ein Phasenvergleich zwischen Synchronisationssignal und jeweiligem Rücksignal statt. Aus dem Ergebnis des Phasenvergleichs und der Stellung des Multiplexers MUX wird in der Steuereinheit UNIT der Zentrale eine neue Stellung für den Multiplexer MUX des jeweiligen Breitbandnetzabschlusses BONT berechnet und diese neue Stellung über Steuersignale zum jeweiligen Breitbandnetzabschluß BONT übertragen, um die Phasendifferenz zwischen Synchronisationssignal und Rücksignal zu kompensieren. Nach erfolgter Synchronisation wird der Schalter S1 wieder geöffnet. Dadurch wird erreicht, daß Signale, und insbesondere Abrufsignale von unterschiedlichen Breitbandnetzabschlüssen BONT aus gesendet in der Zentrale ZE phasengleich empfangen werden. Der Vorgang des Synchronisation kann sowohl bei der Initialisierung, als auch während des Betriebs durchgeführt werden.

Fig. 6 zeigt nun eine schematische Darstellung des Breitbandnetzabschlusses BONT3 aus Fig. 1.

Der Breitbandnetzabschluß BONT3 und seine Funktion gleicht dem Breitbandnetzabschluß BONT2 aus Fig. 5 mit Ausnahme des Schieberegisters und des Multiplexers, die durch einen Zähler COUNT, zwei Komparatoren KOMP1, KOMP2 und ein UND-Gatter AND ersetzt sind.

Der Demodulator DMOD liefert das Synchronisationssignal, das auf den Reset Eingang des Zählers COUNT geführt wird. Der Zähler COUNT zählt nach jedem Reset mit z.B. jeder ansteigenden Flanke des vom Taktgenerator CLK erzeugten Takts stufenweise von einem Minimalwert zu einem Maximalwert. Der Ausgang des Zählers COUNT wird auf den Eingang des Komparators KOMP1 und den Eingang des Komparators KOMP2 geführt. Im Komparator KOMP1 findet ein Vergleich zwischen Eingangssignal und einem von der Steuereinheit UNIT vorgegebenen Wert 1 statt. Ist der Wert des Eingangssignals größer als der Wert 1, liefert der Ausgang des Komparators KOMP1 eine logische Eins. Im Komparator KOMP2 findet ein Vergleich zwischen Eingangssignal und einem von der Steuereinheit UNIT vorgegebenen Wert 2 statt. Ist der Wert 2 größer als der Wert des Eingangssignals, liefert der Ausgang des Komparators KOMP2 eine logische Eins. Der Wert 2 ist stets größer als der Wert 1. Die Ausgänge der Komparatoren KOMP1, KOMP2 sind mit den Eingängen des UND-Gatters AND verbunden. Der Ausgang des UND-Gatters AND ist mit dem ersten Eingang des ODER-Gatters und mit dem Schalter S1 verbunden. Der Ausgang des UND-Gatters AND ist nur dann logisch Eins, wenn der Zähler COUNT einen Wert liefert, der zwischen dem Wert 1 und dem Wert 2 liegt. Dadurch wird eine Verzögerung des Synchronisationssignals erreicht, die über die durch die Steuereinheit UNIT vorgegebenen Werte Wert 1 und Wert 2 einstellbar ist. Ein Vorteil dieser Software-gesteuerten Einstellung der Verzögerung ist es, daß die Dauer der den Breitbandnetzabschlüssen BONT zugewiesenen Zeitschlitze während des Betriebs variabel, je nach Verkehrsaufkommen einstellbar ist.

Im Ausführungsbeispiel ist die Steuereinrichtung CONTROL in der Zentrale ZE als separate Baugruppe zugeordnet. Anstelle einer Steuereinrichtung CONTROL in der Zentrale ZE können auch mehrere, jeweils in einem Breitbandnetzabschluß BONT angeordnete Steuereinrichtungen verwendet werden. Dies hat den Vorteil, daß Kollisionen aufgrund des Wegfalls der Laufzeit über die optische Glasfaserleitungen schneller erkannt werden können.

Des weiteren sind im Ausführungsbeispiel in der Zentrale ZE und den Breitbandnetzabschlüssen BONT der Übersichtlichkeit halber keine Verstärker, keine Dämpfungsglieder, keine Entzerrer, etc., dargestellt, deren Verwendung, Anordnung, Vorteile oder gar Notwendigkeit dem Fachmann z.B. aus "Elektrisches Nachrichtenwesen", 3. Quartal 1993, Seiten 284 bis 259 bekannt sind.

Im Ausführungsbeispiel ist die Aufteilung der Zeitschlitze auf die Breitbandnetzabschlüsse BONT beispielhaft. Bei einer Teilnehmeranzahl von z.B. 100 für Breitbandnetzabschluß BONT1 und einer Teilnehmeranzahl von z.B. 200 für Breitbandnetzabschluß BONT2 ist eine Zeitschlitzdauer von T für Breitbandnetzabschluß BONT 1 und eine Zeitschlitzdauer von 2 T für Breitbandnetzabschluß BONT2 von Vorteil.

Beim Ausführungsbeispiel hat das Breitbandverteilsystem SYS eine Zentrale ZE mit einem Fernseh- und Rundfunk-Server TVS und einem Video-Auf-Abruf Server VOD. Die Zentrale kann auch in eine Hauptzentrale und mehrere Unterzentralen aufgeteilt werden, die voneinander z.B. 100 km entfernt angeordnet sind. Die Hauptzentrale hat z.B. einen Fernseh- und Rundunk-Server TVS, der mit den mehreren Unterzentralen verbunden ist und alle Teilnehmer TN des Breitbandverteilsystems SYS mit Fernseh- und Rundfunksignalen versorgt. Die Unterzentralen haben z.B. jeweils einen Video-auf-Abruf Server VOD mit einer Steuereinrichtung CONTROL zum Versorgen einer Gruppe von Teilnehmern TN mit Videosignalen und zur Überwachung des Zugriffs der Teilnehmer TN der Gruppe auf einen Rückkanal. Dies hat den Vorteil, daß mehrere Server auf regional unterschiedliche Teilnehmerwünsche reagieren könnten.

**Patentansprüche**

1. Breitbandverteilsystem (SYS) zum Verteilen von Fernseh- und Videosignalen, mit einer Zentrale (ZE), mehreren Breitbandnetzabschlüssen (BONT) und mehreren Teilnehmern (TN), bei dem die Breitbandnetzabschlüsse (BONT) mit der Zentrale (ZE) verbunden sind, bei dem Gruppen von Teilnehmern (TN) jeweils mit einem Breitbandnetzabschluß (BONT) verbunden sind, bei dem über einen Vorwärtskanal Fernseh- und Videosignale von der Zentrale (ZE) zu den mehreren Teilnehmern (TN) übertragbar sind, und bei dem über einen Rückkanal Abrufsignale von den mehreren Teilnehmern (TN) zur Zentrale übertragbar sind,
**dadurch gekennzeichnet, daß**
der Rückkanal auf Gruppen von Teilnehmern (TN) im Zeitmultiplexverfahren aufteilbar ist, daß die einzelnen Teilnehmer (TN) einer Gruppe gleichermaßen Zugriff auf den der jeweiligen Gruppe zugewiesenen Teil des Rückkanals haben, und daß zeitgleiches Senden von Abrufsignalen unterschiedlicher Teilnehmer (TN) einer Gruppe über eine Steuereinrichtung (CONTROL) erkennbar, und die Weiterleitung dieser Abrufsignale durch die Steuereinrichtung (CONTROL) unterbindbar ist.

2. Breitbandverteilsystem (SYS) nach Anspruch 1, dadurch gekennzeichnet, daß wenigstens eine Steuereinrichtung (CONTROL) in der Zentrale (ZE) angeordnet ist.

3. Breitbandverteilsystem (SYS) nach Anspruch 1, dadurch gekennzeichnet, daß die Zentrale (ZE) eine Synchronisierungseinrichtung (SYNC) beinhaltet, daß die Breitbandnetzabschlüsse (BONT) jeweils eine Verzögerungseinrichtung (VE) beinhalten, und daß über die Synchronisierungseinrichtung (SYNC) und die Verzögerungseinrichtungen (VE) eine Synchronisation der von den Breitbandnetzabschlüssen (BONT) übertragenen Abrufsignale auf den im Zeitmultiplex aufgeteilten Rückkanal erfolgt.

4. Breitbandverteilsystem (SYS) nach Anspruch 3, dadurch gekennzeichnet, daß die durch die Verzögerungseinrichtungen (VE) hervorgerufenen Verzögerungen derart einstellbar sind, daß die zur Zentrale (ZE) übertragenen Abrufsignale in der Zentrale (ZE) phasengleich empfangbar sind.

5. Breitbandverteilsystem (SYS) nach Anspruch 1, dadurch gekennzeichnet, daß die den Gruppen von Teilnehmern (TN) zugewiesenen Teile des Rückkanals bezüglich der Zeitdauer für jede Gruppe variabel einstellbar sind.

6. Breitbandverteilsystem (SYS) nach Anspruch 3, dadurch gekennzeichnet, daß die Verzögerungseinrichtung (VE) einen Taktgenerator (CLK), ein Schieberegister (REG), einen Multiplexer (MUX) und eine Steuereinheit (UNIT) beinhaltet.

7. Breitbandverteilsystem (SYS) nach Anspruch 3, dadurch gekennzeichnet, daß die Verzögerungseinrichtung (VE) einen Taktgenerator (CLK), einen Zähler (COUNT), zwei Komparatoren (KOMP) und eine Steuereinheit (UNIT) beinhaltet.

8. Breitbandverteilsystem (SYS) nach Anspruch 1, dadurch gekennzeichnet, daß jeder Breitbandnetzabschluß (BONT) eine Steuereinrichtung (CONTROL) hat.

9. Breitbandverteilsystem (SYS) nach Anspruch 1, dadurch gekennzeichnet, daß die Steuereinrichtung (CONTROL) bei zeitgleichem Senden von Abrufsignalen unterschiedlicher Teilnehmer (TN) eine Rückmeldung zu allen mit dem jeweiligen Breitbandnetzabschluß (BONT) verbundenen Teilnehmer (TN) senden kann.

10. Verfahren zum Übertragen von Abrufsignalen von Teilnehmern (TN) zu einer Zentrale (ZE) eines Breitbandverteilsystems (SYS) zum Verteilen von Fernseh- und Videosignalen, bei dem die Abrufsignale in einem Rückkanal des Breitbandverteilsystems (SYS) übertragen werden, und bei dem die Fernseh- und Videosignale in einem Vorwärtskanal des Breitbandverteilsystems (SYS) übertragen werden, dadurch gekennzeichnet, daß der Rückkanal auf Gruppen von Teilnehmern (TN) im Zeitmultiplexverfahren aufgeteilt wird, daß die einzelnen Teilnehmer (TN) einer Gruppe gleichermaßen Zugriff auf den der jeweiligen Gruppe zugewiesenen Teil des Rückkanals haben, und daß zeitgleiches Senden von Abrufsignalen unterschiedlicher Teilnehmer (TN) einer Gruppe über eine Steuereinrichtung (CONTROL) erkannt und die Weiterleitung dieser Abrufsignale durch die Steuereinrichtung (CONTROL) unterbunden wird.

11. Zentrale (ZE) für ein Breitbandverteilsystem (SYS) zum Senden von Fernseh- und Videosignalen über einen Vorwärtskanal und zum Empfang von Abrufsignalen über einen Rückkanal, dadurch gekennzeichnet, daß die Zentrale (ZE) wenigstens eine Steuereinrichtung (CONTROL) hat, daß der Rückkanal im Zeitmultiplexverfahren aufteilbar ist, und daß von jeder Steuereinrichtung (CONTROL) Abrufsignale einer Gruppe von Teilnehmern (TN) empfangbar und zeitgleiches Senden von Abrufsignalen unterschiedlicher Teilnehmer (TN) erkennbar ist.

12. Zentrale (ZE) nach Anspruch 11, dadurch gekennzeichnet, daß die Zentrale (ZE) zusätzlich eine Synchronisiereinrichtung (SYNC) mit einem Taktgenerator (CLK), einer Steuereinheit (UNIT), einem Phasenkomparator (PHASE), einen Modulator (MOD) und einen Demodulator beinhaltet.

TN1

TV

STU

TN2

TN3

ZE

L1

L2

BONT 1

KOAX

STU

TV

TN4

TN5

TN6

L3

BONT 2

TN

KOAX

BONT 3

KOAX

SYS

FIG.1

EP 0 735 767 A2

FIG.2

EP 0 735 767 A2

BONT 1    BONT 2    BONT 3    BONT 1    BONT 2    BONT 3    BONT 1

FIG.3A

TN1  TN2   TN6              TN1        TN6                  TN1

0T        6T  12T       18T       24T       30T       36T
            7T                                          37T        t

BONT 1
    BONT 2    BONT 3
              BONT 1        BONT 1

FIG.3B

TN1        TN1     TN1

FIG.4

FIG.5

BONT 3

FIG.6